# EUROPEAN PATENT SPECIFICATION

(11) **EP 3 056 964 B1**
(45) Date of publication and mention of the grant of the patent: **29.07.2020**
(21) Application number: 15154795.7
(22) Date of filing: 12.02.2015
(51) Int. Cl.: G06F 1/16

(54) **Docking station and protective cover for a portable electronic device**
Andockstation und Schutzabdeckung für eine tragbare elektronische Vorrichtung
Station d'accueil et couverture de protection pour un dispositif électronique portable

(43) Date of publication of application: 17.08.2016
(73) Proprietor: IND Systeme GmbH, 22335 Hamburg (DE)
(72) Inventor: Butz, Stefan, 8700 Küsnacht (CH)
(74) Representative: ABYOO

(56) References cited:
- US-B1- 7 778 023

## Description

### Field of the invention

The invention relates to a kit comprising a docking station for charging a portable electronic device and a removable protective cover for the portable electronic device.

### Description of prior art

Various docking stations have been designed for use with portable electronic devices for charging their batteries. Typically, such a docking station has a recess with a particular shape and size corresponding to the external shape of the portable electronic device so as to guide and hold the device in the docking station. Inserting the device into the docking station causes an electrical connector arranged on the docking station to interconnect with a corresponding electrical connector arranged on the portable electronic device, allowing the transfer of electric power from the docking station to the device for recharging its batteries.

Such docking stations are known for example from US 5317691. The docking station comprises a recess surrounded by a housing having opposite side walls, a front wall and a rear wall. An electrical connector is arranged on a bottom wall of the station for transferring power to the portable electronic device when it is docked inside the recess. US7778023 discloses a cover for protecting a portable electronic device and a docking station for charging the electronic device.

Portable electronic devices, such as mobile phones or personal digital assistants (PDA) are generally equipped with a removable protective cover for protecting and/or decorating the external shell of the portable electronic device. When one wants to charge a portable electronic device with the above described docking station, one has to remove the protective cover before inserting the device in the docking station. After the charging, one has to put the protective cover back on the portable electronic device. Repeatedly removing and putting back the protective cover are very inconvenient tasks. These tasks are time-consuming, annoying, and may lead to a faster deterioration or uneven wear of the protective cover and/or of the portable electronic device.

Other docking stations allow to charge a portable electronic device, whether or not it is fitted with a protective cover. For example, an adapter that fits the size of the portable electronic device or of the protective cover may be docked on the docking station, and serves as an intermediate component between the portable electronic device and the docking station. This solution is far from being convenient because one has to use and carry several base bodies. Moreover, when the portable electronic device has large dimensions, the adapter will have large dimensions too, which may be very cumbersome.

Another solution allowing the docking of a portable electronic device fitted with or without its protective cover is to mount the electrical connector of the docking station on its bottom surface and to arrange on the docking station a simple backrest at a sufficient lateral distance from the electrical connector to allow the docking of the device fitted with or without its protective cover. These docking stations do not have lateral guides and /or front guides. This solution is not convenient because the connection between the portable electronic device and the electrical connector of the docking station is tedious and inaccurate due to the lack of material guiding. It also leads to a faster deterioration and uneven wear of the electrical connectors.

### Summary of the invention

It is an object of the invention to provide a docking station for charging a portable electronic device through a connector of the portable electronic device and a protective cover for said portable electronic device, which address the above problems.

The invention is defined by the independent claim. The dependent claims define advantageous embodiments.

According to the invention, there is provided a kit for protecting and for charging a portable electronic device through a first connector of the portable electronic device, said kit comprising:
- a docking station including a second connector adapted to be interconnected with the first connector according to an insertion axis AA' and including a plurality of guides arranged and sized to slidingly guide the portable electronic device towards the second connector and according to the insertion axis AA' when the portable electronic device is inserted between the guides; and
- a removable protective cover adapted to be mounted around the portable electronic device, said cover comprising a first through hole arranged and sized for accessing the second connector when the removable protective cover is mounted around the portable electronic device.

The protective cover further comprises second through holes arranged to correspond respectively to the arrangement of the guides, said second through holes having a size respectively matching or exceeding the size of the corresponding guides. In other words, the second through holes are shaped in such a way that a volume occupied by the matter of the protective cover does not intersect with a volume occupied by the matter of the guides when the portable electronic device is covered by the protective cover and docked into the docking station.

Thanks to such a configuration, the guides of the docking station are able to get in contact with the external shell (or case) of the device when it is covered by the protective cover so as to slidingly guide the device and its first connector towards to second connector and according to the insertion axis AA'. In other words, a kit according to the invention allows the guided docking of the portable electronic device into the docking station, irrespective of the presence or absence of the protective cover on the portable electronic device.

Preferably, the kit according to the invention comprises a cradle-shaped docking station presenting a recess shaped and sized for receiving the portable electronic device when covered by the protective cover, and the guides are protruding inwardly into the recess.

In such case, the shape and size of the recess allow the insertion of a portable electronic device no matter if it has or hasn't a protective cover, and the docking station is more robust and so are the guides, increasing the expected lifetime of these elements.

More preferably, the kit according to the invention comprises at least five guides which are sized and arranged so as to limit a movement of the portable electronic device, when the portable electronic device is inserted between said five guides, to only a linear translation according to the insertion axis AA'.
The protective cover then of course also comprises second through holes in the amount of five and arranged to correspond respectively to the arrangement of the five guides, said second through holes each having a size respectively matching or exceeding the size of the corresponding guides.

Such arrangement of the guides and of the second trough holes forces a linear translation movement of the portable electronic device according to the insertion axis AA' and towards or away from the second connector of the docking station, improving even more the proper interconnection of the first and second connectors.

Alternatively or complementarily, at least one guide furthermore comprises a first locking means configured to cooperate with a second locking means arranged on the portable electronic device for mechanically locking the portable electrical device on the docking station when the first connector is interconnected with the second connector. This permits to avoid an unwanted undocking of the portable electronic device.

### Short description of the drawings

These and further aspects of the invention will be explained in greater detail by way of example and with reference to the accompanying drawings in which:
- Fig. 1: shows a top view of a kit according to an exemplary embodiment of the invention;
- Fig. 2: shows a side view of the kit of fig. 1;
- Fig. 3: shows a cutaway and partial front view of the kit of fig. 1;
- Fig. 4: shows a perspective view of the kit of fig. 1;
- Fig. 5: shows a perspective view of the kit of fig. 1 when used with a portable electronic device;
- Fig .6: shows a top view of a kit according to another embodiment of the invention.
- Fig. 7: shows a top view of a kit according to another embodiment of the invention.

The drawings of the figures are neither drawn to scale nor proportioned. Generally, similar or identical components are denoted by the same reference numerals in the figures.

### Detailed description of embodiments of the invention

Various embodiments of the present invention will now be described.

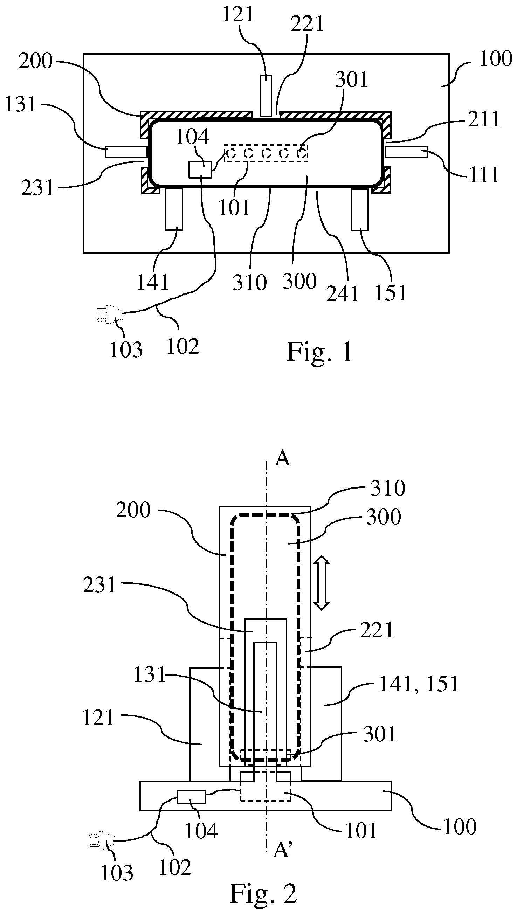

Fig. 1 shows a top view of a kit according to an exemplary first embodiment of the invention.

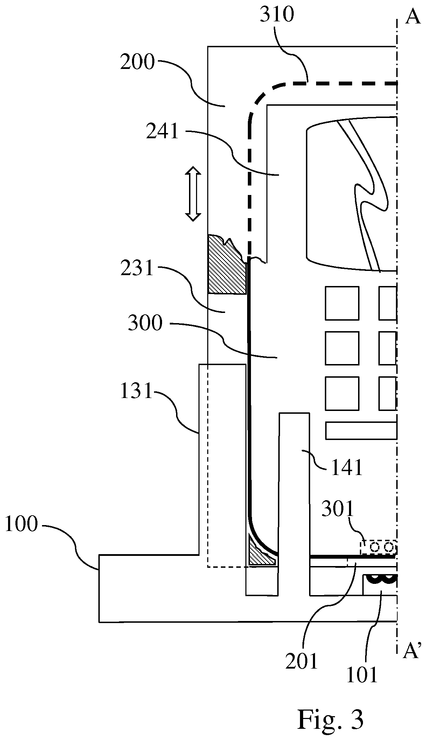

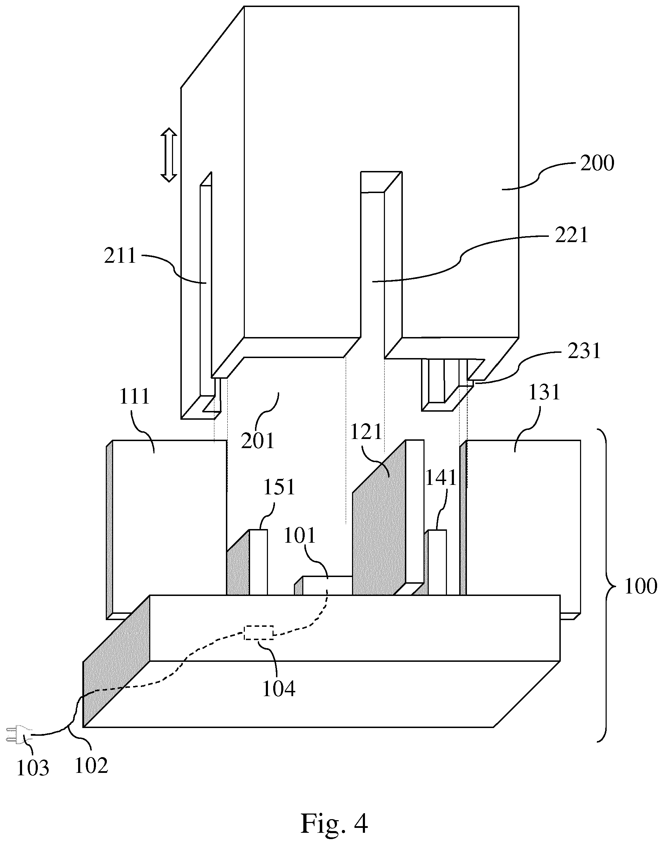

Fig. 2 shows a side view of the kit of fig. 1. Fig. 3 shows a cutaway and partial front view of the kit of fig. 1. Fig. 4 shows a perspective view of the kit of fig. 1.

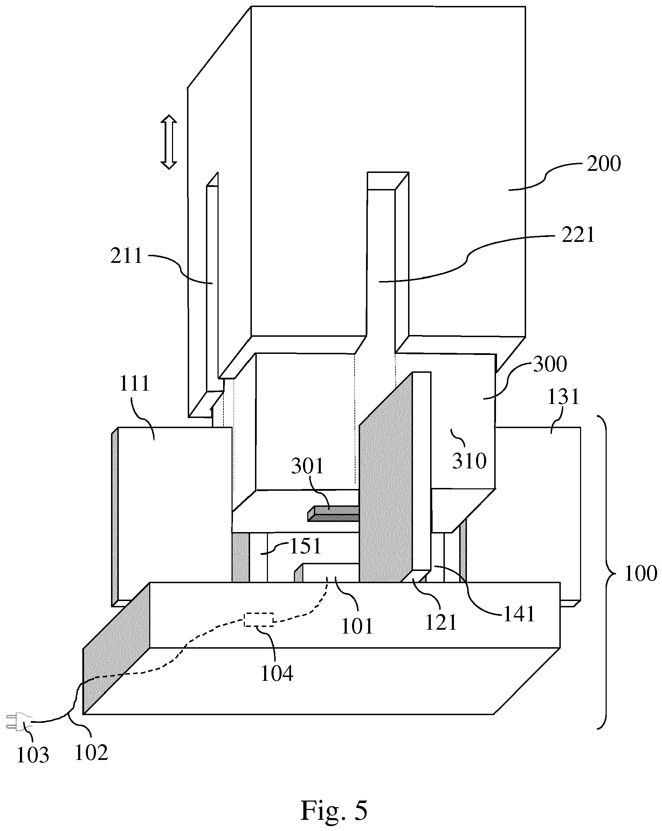

Fig. 5 shows a perspective view of the kit of fig. 1 when used with a portable electronic device.

The portable electronic device may for example be a personal digital assistant (PDA), or a mobile phone, or a portable music player, or GPS receiver, or a remote control, or a voice recorder. These devices generally operate on an internal battery which shall be recharged from time to time. In these devices, electric and/or electronic circuitry links the internal battery to a first connector (301) to which external power can be applied for charging the internal batteries.

As shown on figs. 1 to 5, the kit comprises a docking station (100) and a removable protective cover (200) which is designed for covering at least a part of a body of the portable electronic device (300).
The docking station (100) is a device onto which one can dock the portable electronic device for recharging its internal battery through its first connector (301). To this end, the docking station (100) includes a second connector (101) which is adapted to be interconnected with the first connector (301) according to an insertion axis AA'. The insertion axis AA', which will be better seen on fig.2, is the nominal axis of insertion of the first connector into the second connector or vice versa.
The docking station also comprises electric and/or electronic circuitry (102, 103, 104) for connecting its second connector (101) to a power supply, which may be an internal power supply, such as a battery included in the docking station, or an external power supply such as the mains supply, possibly via a transformer and/or additional circuitry. Hence, when the portable electronic device is docked onto the docking station in such a way that the first and second connectors are interconnected, recharging of the internal battery of the portable electronic device will take place. These elements are well known in the art and won't be described further.
The docking station furthermore comprises a plurality of guides (111, 121, 131, 141, 151). These guides are arranged and sized to slidingly guide the portable electronic device towards the second connector (101) and according to the insertion axis AA' when the portable electronic device is inserted between said guides. Such guiding therefore brings the first connector (301) into correct alignment with the second connector (101) for proper interconnection.
Is shall be understood that the guides are arranged and sized to enter in sliding contact with an external surface (310) of the portable device (300).
In the example of figs.1 to 5, the portable electronic device has substantially the shape of a straight parallelepiped, as do most such devices, and the guides also have the shape of a straight parallelepiped. Depending on the shape and size of the portable electronic device, the guides may nevertheless have a variety of shapes and sizes, and they may be present in various numbers and arranged at various positions on the docking station, provided they are adapted to slidingly guide the portable electronic device towards the second connector (101) and according to the insertion axis AA'.

The kit also comprises a removable protective cover (200) which is adapted to be mounted around the portable electronic device (300) to protect the portable electronic device (300) for example from shocks or scratches. The protective cover preferably doesn't cover control buttons and/or a screen of the device (300) in order to allow direct access thereto.
By the term "removable", it shall be understood that the protective cover (200) is adapted to be fitted around the portable electronic device and to be removed from the portable electronic device without the use of any tool.
The cover (200) comprises at least a first through hole (201) arranged and sized for accessing the second connector (301) of the device (300). Generally, the second connector (301) is placed on a bottom side of the portable device (300) and so is in this case the first through hole. Accordingly, when the removable protective cover (200) is mounted around the portable electronic device (300), the second connector (301) may be interconnected with the first connector (101) without removing the cover (200).

The cover furthermore comprises second through holes (211, 221, 231, 241) which are arranged (i.e. positioned) to correspond respectively to the arrangement (i.e. position) of the guides (111, 121, 131, 141, 151) on the docking station (100). These second through holes are furthermore sized to respectively match or exceed the size of their corresponding guides. In other words, the second through holes are shaped in such a way that a volume occupied by the matter of the protective cover does not intersect with a volume occupied by the matter of the guides when the portable electronic device is covered by the protective cover and docked into the docking station. Accordingly, the presence of the protective cover (200) on the portable electronic device (300) will not hinder the guiding of said device by the guides when said device is docked onto the docking station (100). The guides will indeed interact directly with the external case (310) of the device (300), irrespective of the presence or absence of the protective cover on the device. Accordingly, the portable electronic device is always correctly guided towards the second connector and the second connector will always be correctly aligned with the first connector when interconnected. The user does not have to remove or put back the cover when he wants to dock his portable device, and the risk of damaging the first and/or the second electric connector is reduced.

When the portable electronic device is inserted between the guides, it is guided and translates along the insertion axis AA', as shown by a plain double arrow on figs. 2 to 5. The guides are in sliding contact with the external shell (310) of the portable device (300), limiting the movement of the device. Accordingly, the first connector (301) and the second connector (101) are perfectly aligned when one docks the portable electronic device.

The second through holes may have various shapes and sizes. For example, as better seen on figs. 2 and 3, a lateral second through hole (231) has a size exceeding the size of the corresponding lateral guide (131). A front second through hole (241) is much larger than the front guide (141), which allows direct access to the screen and to the control buttons of the portable electronic device.

Preferably, the guides (111, 121, 131, 141) are guiding rails. More preferably, the guiding rails are straight and parallel to the insertion axis AA', as illustrated on figs. 1 to 5 wherein each of the guides (111, 121, 131, 141) has a parallelepipedic shape and has a flat guiding surface which is parallel to the insertion axis AA'.

Fig .6 shows a top view of a kit according to a preferred embodiment of the invention. In this embodiment, the docking station has the shape of a cradle presenting a recess. The recess is sized and shaped for receiving the portable electronic device (100) when covered by the protective cover (200). The guides (111, 121, 131, 141, 151) are protruding inwardly into the recess. The recess may for example present opposed side portions, a back portion, and a front portion. These portions do not have to be contiguous and they may be independently extending from a bottom portion of the docking station. In a preferred embodiment, these portion are contiguous. In a still more preferred embodiment, the front portion has a lower height than the other portions in order to free an access to control buttons and/or to the screen of the device (300) when it is docked into the docking station. The side portions, the front portion, the back portion and the bottom portion of the cradle may for example be molded plastic portions with the guides extending from these portion into the recess. Alternatively, the recess does not have a physical front portion, but comprises lips extending laterally from each of the side portions towards the front portion.
Such embodiment allows to strengthen the guides, reducing the risk of bending of the guides when the portable electronic device is docked with too much strength for example.

Preferably, when the portable electronic device has a substantially parallelepipedic shape, at least 5 guides (111, 121, 131, 141, 151) are arranged on the docking station (100). More preferably, one guide (111) is arranged on a first side portion of the docking station; one guide (131) is arranged on a second side portion of the docking station opposite to the first side portion, one guide (121) is arranged on a back portion of the docking station, two guides (141, 151) are arranged on a front portion of the docking station, as shown on fig.1 and 4. Accordingly, the removable covers case comprises five corresponding second through holes (211, 221, 231, 241, 251) disposed to correspond respectively to the arrangement of the guides (111, 121, 131, 141, 151). The removable cover case (200) may comprise an additional through hole for accessing the screen and/or the buttons of the portable electronic device (300).

Preferably, at least one of the guides (111, 121, 131, 141, 151) is elastically movable in a direction transversal to the insertion axis AA'. The elastically movable guide may for example be arranged on a side portion of the docking station. When the device is inserted between the guides, the elastically movable guide is pushed outwards. When the portable electronic device is undocked, the movable guide returns to its at-rest position. This facilitates the positioning of the portable device between the guides by the user because it requires much less accuracy when one wants to dock the portable device on the docking station.

When the docking station has the shape of a cradle presenting a recess, the elastically movable guide at rest preferably protrudes inside the recess when the portable electronic device (300) is inserted between the guides. This compresses the portable device between the guides, reducing even more the risk of unwanted undocking. The elastically movable guide may for example be mounted on a spring.

More than one guide may be elastically movable. Two guides may be elastically movable, either facing each other or being perpendicular to each other. For example and referring to fig. 1, a first guide (111) and a second guide (131) are facing each other and may be elastically movable. Alternatively, a first guide (121) and a second guide (131) are perpendicular to each other and may be elastically movable. Alternatively or complementary, when the recess has the shape of a parallelepiped, two movable guides may be disposed on a same portion of the parallelepiped, for example on the back portion of the recess.

Preferably, at least two guides are disposed on a front portion of the docking station. A first front guide is shaped by a first lip protruding from a first side portion of the docking station and second front guide is shaped by a second lip protruding from a second side portion of the docking station opposite to the first side portion. With this embodiment, control buttons and/or the screen of the portable device are directly reachable when the device is docked on the docking station, and the linear translation of the device is still ensured, while only a limited portion of the front face of the device is covered by the guides. In a more preferred embodiment, the front side furthermore comprises an extra lip extending from a bottom side portion of the docking station. This extra lip allows a tighter support of the portable device when it is docked, and avoids inopportune undocking.

Preferably, each of the second through holes (211, 221, 231,...) is arranged at least 0,5 mm away from a corner of the removable protective cover (200). Such protective cover protects the edges of the portable electronic device. Furthermore, any two adjacent second through holes (211, 221, 231,...) are preferably separated from each other by at least 0,5 mm., so that cover portions between the second through holes will be less subject to torn or deformation.

Preferably, the removable protective cover (200) is shaped and sized to avoid any direct contact between the portable electronic device (300) and the docking station (100) with the exception of the guides (111, 121, 131, 141, 151,...) and the second connector (101) when the removable protective cover (200) is mounted around the portable electronic device (300) and when the device (300) is inserted between the guides. With such embodiment the guidance is solely ensured by the contact between the guides and the external surface of the portable electronic device, avoiding any misguidance.

Preferably, the removable protective cover (200) comprises a rigid material extending in the direction of the insertion axis AA' from a bottom portion of the removable protective cover (200) to a height corresponding at least to a length of the guides taken in the direction of the insertion axis AA'. The bottom portion of the removable cover (200) is the portion of the cover wherein the first through hole (201) is arranged. The rigid material may be for example a molded plastic like polyethylene. This embodiment avoids deformation of the protective cover (200) in case of contact between the cover (200) and the guides. The rest of the removable protective cover may be a rigid material, or a soft and flexible material to enhance handling or comfort.

Preferably, at least one guide furthermore comprises a first locking means configured to cooperate with a second locking means located on the external shell (310) of the portable electronic device (300) when the first connector (301) and the second connector (101) are interconnected. It allows the locking of the device (300) when it is in place on the docking station, avoiding inopportune undocking.

Preferably, each guide has a guiding length which is greater than 20%, preferably greater than 30%, more preferably greater than 50% of a length of the portable electronic device (300), said lengths being taken in the direction of the insertion axis AA'. Ensuring a minimum guiding length will indeed reduce the risk of misguiding the portable device.

More preferably, a bottom portion of the docking station has at least one bottom guide, and the protective cover has a corresponding through hole. This bottom guide reduces the risk of bad interconnection between the first connector and the second connector when the portable device has been misguided during his translation movement towards the second connector, for example when one forces the device between the other guides.

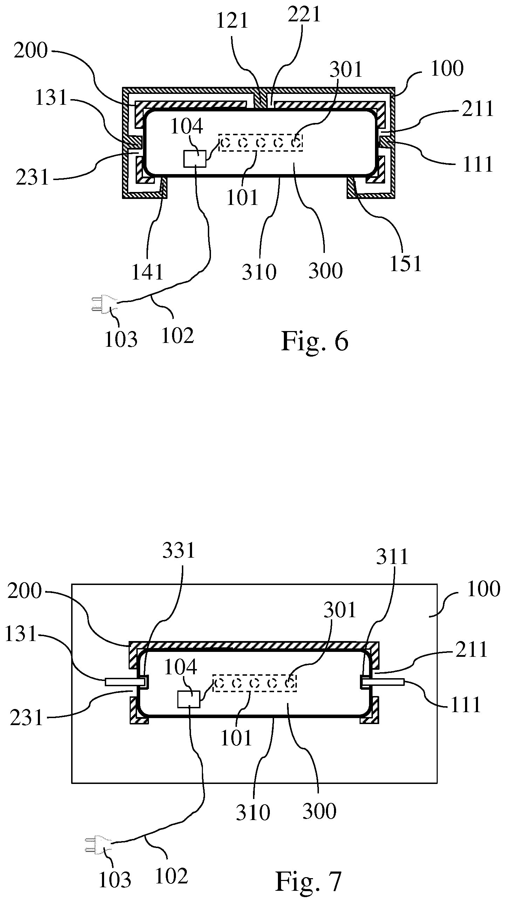

Fig. 7 shows a top view of a kit according to yet another preferred embodiment of the invention. In this embodiment, the kit furthermore comprises a portable electronic device (300) presenting at least two grooves (311, 331) on an external shell (310) of the portable device (300), and at least two guides (111, 131) among the plurality of guides of the docking station (100) are arranged and sized to cooperate with the at least two grooves (311, 331). In the example of fig. 7, the two grooves (311, 331) are arranged on opposite faces of the external shell (310). Accordingly, the protective cover (200) has two second through holes (211, 231) arranged to correspond respectively to the arrangement of the guides (111, 131) and whose size equals or exceeds the size of the corresponding guides.

The present invention has been described in terms of specific embodiments, which are illustrative of the invention and not to be construed as limiting. More generally, it will be appreciated by persons skilled in the art that the present invention is not limited by what has been particularly shown and/or described hereinabove.
Reference numerals in the claims do not limit their protective scope.
Use of the verbs "to comprise", "to include", "to be composed of", or any other variant, as well as their respective conjugations, does not exclude the presence of elements other than those stated.
Use of the article "a", "an" or "the" preceding an element does not exclude the presence of a plurality of such elements.

## Claims

1. A kit for protecting and for charging a portable electronic device (300) through a first connector (301) of the portable electronic device (300), said kit comprising:
- a docking station (100) including a second connector (101) adapted to be interconnected with the first connector (301) according to an insertion axis (AA') and including a plurality of guides (111, 121, 131,...) arranged and sized to slidingly guide the portable electronic device (300) towards the second connector (101) and according to the insertion axis (AA') when the portable electronic device (300) is inserted between the guides (111, 121, 131,...), and
- a removable protective cover (200) adapted to be mounted around the portable electronic device (300), said cover (200) comprising a first through hole (201) arranged and sized for accessing the second connector (101) when the removable protective cover (200) is mounted around the portable electronic device (300),
**characterized in that**
the cover (200) further comprises second through holes (211, 221, 231,...) arranged to correspond respectively to the arrangement of the guides (111, 121, 131,...), and **in that** the second through holes (211, 221, 231,...) have a size respectively matching or exceeding the size of the corresponding guides (111, 121, 131,...).

2. A kit according to claim 1, **characterized in that** the guides (111, 121, 131, 141, 151) are guiding rails.

3. A kit according to claim 2, **characterized in that** the guiding rails are straight and parallel to the insertion axis (AA').

4. A kit according to any of the previous claims, **characterized in that** at least one of the plurality of guides (111, 121, 131,...) is elastically movable in a direction transversal to the insertion axis (AA').

5. A kit according to any of the previous claims, **characterized in that** the docking station (100) has the shape of a cradle presenting a recess sized for receiving the portable electronic device (300) when covered by the cover (200), and **in that** the guides (111, 121, 131,...) are protruding inwardly into the recess .

6. A kit according to claim 5, **characterized in that** the guides comprise a first lip protruding from a first side portion of the cradle and a second lip protruding from a second side portion of the cradle opposed to the first side portion.

7. A kit according to claim 6, **characterized in that** a front side portion of the cradle furthermore comprises third lips protruding from a bottom side portion of the cradle.

8. A kit according to any of the previous claims, **characterized in that** the plurality of guides comprises at least five guides which are sized and arranged to limit the movement of the portable electronic device (300) to only a linear translation according to the insertion axis (AA') when the portable electronic device (300) is inserted between said five guides.

9. A kit according to claim 8, **characterized in that** the five guides comprise one guide on a first side portion of the docking station, one guide on a second side portion of the docking station opposite the first side portion, two guides on a rear side portion of the docking station, and one guide on a front side portion of the docking station.

10. A kit according to any of the previous claims, **characterized in that** each of the second through holes (211, 221, 231,...) is arranged at least 0,5 mm away from a corner of the removable protective cover (200).

11. A kit according to any of the previous claims, **characterized in that** the portable electronic device is a mobile phone, or a personal digital assistant, or a portable music player, or a voice recorder, or a remote control, or a GPS receiver.

12. A kit according to any of the previous claims, **characterized in that** the cover (200) is shaped and sized to avoid any direct contact between the portable electronic device (300) and the docking station (100), with exception of the guides (111, 121, 131,...) and the second connector (101), when the removable protective cover (200) is mounted around the portable electronic device (300) and when the portable electronic device (300) is inserted between the guides.

13. A kit according to any of the previous claims, **characterized in that** at least one guide furthermore comprises a first locking means configured to cooperate with a second locking means arranged on the portable electronic device (300) for mechanically locking the portable electrical device (300) on the docking station (100) when the first connector (301) is interconnected with the second connector (101).

14. A kit according to any of the previous claims, **characterized in that** each guide has a guiding length which is greater than 20%, preferably greater than 30%, more preferably greater than 50% of a length of the portable electronic device (300), said lengths being taken in the direction of the insertion axis (AA').

15. A kit according to any one of the previous claims, the kit furthermore comprising a portable electronic device (300) presenting at least two grooves (311, 331) on an external shell (310) of the portable device (300), **characterized in that** at least two guides (111, 131) among the plurality of guides are arranged and sized to cooperate with the at least two grooves (311, 331).

## Patentansprüche

1. Kit zum Schützen und Laden einer tragbaren elektronischen Vorrichtung (300) durch einen ersten Konnektor (301) der tragbaren elektronischen Vorrichtung (300), wobei das genannte Kit umfasst:
- eine Andockstation (100), die einen zweiten Konnektor (101) enthält, der zum Verschalten mit dem ersten Konnektor (301) gemäß einer Einführachse (AA') geeignet ist und eine Vielzahl von Führungen (111, 121, 131, usw.) enthält, die angeordnet und bemessen sind, um die tragbare elektronische Vorrichtung (300) zum zweiten Konnektor (101) und gemäß der Einführachse gleitend zu führen, wenn die tragbare elektronische Vorrichtung (300) zwischen den Führungen (111, 121, 131, usw.) eingeführt ist, und
- eine abnehmbare Schutzabdeckung (200), die geeignet ist, um die tragbare elektronische Vorrichtung (300) montiert zu sein, wobei die genannte Abdeckung (200) ein erstes Durchgangsloch (201) umfasst, das zum Zugreifen auf den zweiten Konnektor (101) angeordnet und bemessen ist, wenn die abnehmbare Schutzabdeckung (202) um die tragbare elektronische Vorrichtung (30) montiert ist,
**dadurch gekennzeichnet, dass**
die Abdeckung (200) weiterhin zweite Durchgangslöcher (211, 221, 231, usw.) umfasst, die angeordnet sind, um jeweils der Anordnung der Führungen (111, 121, 131, usw.) zu entsprechen und dass die zweiten Durchgangslöcher (211, 221, 231, usw.) eine Größe aufweisen, die jeweils der Größe der entsprechenden Führungen (111, 121, 131, usw.) entspricht oder diese überschreitet.

2. Kit gemäß Anspruch 1, **dadurch gekennzeichnet, dass** die Führungen (111, 121, 131, 141, 151) Führungsschienen sind.

3. Kit gemäß Anspruch 2, **dadurch gekennzeichnet, dass** die Führungsschienen gerade und parallel zur Einführachse (AA') sind.

4. Kit gemäß irgendeinem der voranstehenden Ansprüche, **dadurch gekennzeichnet, dass** wenigstens eine aus der Vielzahl von Führungen (111, 121, 131, usw.) in einer zur Einführachse (AA') quer verlaufenden Richtung elastisch bewegbar ist.

5. Kit gemäß irgendeinem der voranstehenden Ansprüche, **dadurch gekennzeichnet, dass** die Andockstation (100) die Form einer Basisstation aufweist, die einen Ausschnitt aufweist, der zum Aufnehmen der tragbaren elektronischen Vorrichtung (300) bemessen ist, wenn sie von der Abdeckung (200) abgedeckt ist, und dass die Führungen (111, 121, 131, usw.) einwärts in den Ausschnitt hervorstehen.

6. Kit gemäß Anspruch 5, **dadurch gekennzeichnet, dass** die Führungen eine erste Lippe, die von dem ersten seitlichen Abschnitt der Basisstation hervorsteht, und eine zweite Lippe, die von einem zweiten seitlichen Abschnitt der Basisstation gegenüber dem ersten seitlichen Abschnitt hervorsteht, umfassen.

7. Kit gemäß Anspruch 6, **dadurch gekennzeichnet, dass** ein vorderer seitlicher Abschnitt der Basisstation weiterhin dritte Lippen umfasst, die von einem unteren seitlichen Abschnitt der Basisstation hervorstehen.

8. Kit gemäß irgendeinem der voranstehenden Ansprüche, **dadurch gekennzeichnet, dass** die Vielzahl von Führungen wenigstens fünf Führungen umfasst, die bemessen und angeordnet sind, um die Bewegung der tragbaren elektronischen Vorrichtung (300) auf nur eine lineare Translation gemäß der Einführachse (AA') zu begrenzen, wenn die tragbare elektronische Vorrichtung (300) zwischen fünf Führungen eingeführt ist.

9. Kit gemäß Anspruch 8, **dadurch gekennzeichnet, dass** die fünf Führungen eine Führung auf einem ersten seitlichen Abschnitt der Andockstation, eine Führung auf einem zweiten seitlichen Abschnitt der Andockstation gegenüber dem ersten seitlichen Abschnitt, zwei Führungen auf einem rückwärtigen Abschnitt der Andockstation, und eine Führung auf einem vorderen Abschnitt der Andockstation umfassen.

10. Kit gemäß irgendeinem der voranstehenden Ansprüche, **dadurch gekennzeichnet, dass** jedes der zweiten Durchgangslöcher (211, 221, 231, usw.) wenigstens 0,5 mm entfernt von einer Ecke der abnehmbaren Schutzabdeckung (200) angeordnet ist.

11. Kit gemäß irgendeinem der voranstehenden Ansprüche, **dadurch gekennzeichnet, dass** die tragbare elektronische Vorrichtung ein Mobiltelefon oder ein Organizer oder ein tragbares Musikabspielgerät oder ein Diktiergerät oder eine Fernbedienung oder ein GPS-Empfänger ist.

12. Kit gemäß irgendeinem der voranstehenden Ansprüche, **dadurch gekennzeichnet, dass** die Abdeckung (200) geformt und bemessen ist, um mit Ausnahme der Führungen (111, 121, 131, usw.) und dem zweiten Konnektor (101) jeglichen direkten Kontakt zwischen der tragbaren elektronischen Vorrichtung (300) und der Andockstation (100) zu vermeiden, wenn die abnehmbare Schutzabdeckung (200) um die tragbare elektronische Vorrichtung (300) montiert ist und wenn die tragbare elektronische Vorrichtung (300) zwischen den Führungen eingeführt ist.

13. Kit gemäß irgendeinem der voranstehenden Ansprüche, **dadurch gekennzeichnet, dass** wenigstens eine Führung weiterhin ein erstes Verriegelungsmittel umfasst, das zum Zusammenwirken mit einem zweiten Verriegelungsmittel ausgestaltet ist, das auf der tragbaren elektronischen Vorrichtung (300) zum mechanischen Verriegeln der tragbaren elektronischen Vorrichtung (300) auf der Andockstation (100) angeordnet ist, wenn der erste Konnektor (301) mit dem zweiten Konnektor (101) verschaltet ist.

14. Kit gemäß irgendeinem der voranstehenden Ansprüche, **dadurch gekennzeichnet, dass** jede Führung eine Führungslänge aufweist, die größer ist als 20 %, bevorzugt größer als 30 %, weiter bevorzugt größer als 50 % der Länge der tragbaren elektronischen Vorrichtung (300), wobei die genannten Längen in der Richtung der Einführachse (AA') berücksichtigt sind.

15. Kit gemäß irgendeinem der voranstehenden Ansprüche, wobei das Kit weiterhin eine tragbare elektronische Vorrichtung (300) umfasst, die wenigstens zwei Rillen (311, 331) auf einer externen Schale (310) der tragbaren Vorrichtung (300) aufweist, **dadurch gekennzeichnet, dass** wenigstens zwei Führungen (11, 131) aus der Vielzahl von Führungen angeordnet und bemessen sind, um mit den wenigstens zwei Gruppen (311, 331) zusammenzuwirken.

## Revendications

1. Kit de protection et de charge d'un dispositif électronique portable (300) par l'intermédiaire d'un premier connecteur (301) du dispositif électronique portable (300), ledit kit comprenant:
- une station d'accueil (100) comprenant un second connecteur (101) qui est adapté pour être interconnecté avec le premier connecteur (301) suivant un axe d'insertion (AA') et comprenant une pluralité de guides (111, 121, 131, ...) agencés et dimensionnés de manière à guider de façon coulissante le dispositif électronique portable (300) en direction du second connecteur (101) et suivant l'axe d'insertion (AA') lorsque le dispositif électronique portable (300) est inséré entre les guides (111, 121, 131, ...), et
- un couvercle de protection amovible (200) qui est adapté pour être monté autour du dispositif électronique portable (300), ledit couvercle (200) comportant un premier trou traversant (201) agencé et dimensionné de manière à offrir un accès au second connecteur (101) lorsque le couvercle de protection amovible (200) est monté autour du dispositif électronique portable (300),
**caractérisé en ce que** le couvercle (200) comporte en outre des seconds trous traversants (211, 221, 231, ...) qui sont agencés de manière à correspondre respectivement à l'agencement des guides (111, 121, 131, ...), et **en ce que** les seconds trous traversants (211, 221, 231, ...) présentent une taille qui coïncide avec ou dépasse, respectivement, la taille des guides correspondants (111, 121, 131, ...) .

2. Kit selon la revendication 1, **caractérisé en ce que** les guides (111, 121, 131, 141, 151) sont des rails de guidage.

3. Kit selon la revendication 2, **caractérisé en ce que** les rails de guidage sont droits et parallèles à l'axe d'insertion (AA').

4. Kit selon l'une quelconque des revendications précédentes, **caractérisé en ce qu'**au moins un parmi la pluralité de guides (111, 121, 131, ...) est déplaçable de façon élastique dans une direction transversale à l'axe d'insertion (AA').

5. Kit selon l'une quelconque des revendications précédentes, **caractérisé en ce que** la station d'accueil (100) se présente sous la forme d'un berceau comportant un évidement dimensionné pour recevoir le dispositif électronique portable (300) lorsqu'il est couvert par le couvercle (200), et **en ce que** les guides (111, 121, 131, ...) font saillie vers l'intérieur dans l'évidement.

6. Kit selon la revendication 5, **caractérisé en ce que** les guides comportent une première lèvre qui fait saillie à partir d'un première partie latérale du berceau et une deuxième lèvre qui fait saillie à partir d'une seconde partie latérale du berceau opposée à la première partie latérale.

7. Kit selon la revendication 6, **caractérisé en ce qu'**une partie latérale avant du berceau comporte en outre des troisièmes lèvres qui font saillie à partir d'une partie latérale inférieure du berceau.

8. Kit selon l'une quelconque des revendications précédentes, **caractérisé en ce que** la pluralité de guides comprend au moins cinq guides qui sont dimensionnés et agencés de manière à limiter le déplacement du dispositif électronique portable (300) à seulement un déplacement linéaire suivant l'axe d'insertion (AA') lorsque le dispositif électronique portable (300) est inséré entre lesdits cinq guides.

9. Kit selon la revendication 8, **caractérisé en ce que** les cinq guides comprennent un guide sur un première partie latérale de la station d'accueil, un guide sur une seconde partie latérale de la station d'accueil opposée à la première partie latérale, deux guides sur une partie arrière latérale de la station d'accueil, et un guide sur une partie latérale avant de la station d'accueil.

10. Kit selon l'une quelconque des revendications précédentes, **caractérisé en ce que** chacun des seconds trous traversants (211, 221, 231, ...) est agencé à une distance d'au moins 0,5 mm d'un coin du couvercle de protection amovible (200).

11. Kit selon l'une quelconque des revendications précédentes, **caractérisé en ce que** le dispositif électronique portable est un téléphone mobile, ou un assistant numérique personnel, ou un lecteur de musique portatif, ou un enregistreur vocal, ou une commande à distance, ou un récepteur GPS.

12. Kit selon l'une quelconque des revendications précédentes, **caractérisé en ce que** le couvercle (200) est configuré et dimensionné de manière à éviter tout contact direct entre le dispositif électronique portable (300) et la station d'accueil (100), à l'exception des guides (111, 121, 131, ...) et du second connecteur (101), lorsque le couvercle de protection amovible (200) est monté autour du dispositif électronique portable (300) et lorsque le dispositif électronique portable (300) est inséré entre les guides.

13. Kit selon l'une quelconque des revendications précédentes, **caractérisé en ce qu'**au moins un guide comprend en outre un premier moyen de verrouillage qui est configuré de manière à coopérer avec un second moyen de verrouillage agencé sur le dispositif électronique portable (300) dans le but de verrouiller de façon mécanique le dispositif électronique portable (300) sur la station d'accueil (100) lorsque le premier connecteur (301) est interconnecté au second connecteur (101).

14. Kit selon l'une quelconque des revendications précédentes, **caractérisé en ce que** chaque guide présente une longueur de guidage qui est supérieure à 20 %, de préférence supérieure à 30 %, et de préférence encore supérieure à 50 % d'une longueur du dispositif électronique portable (300), lesdites longueurs étant considérées dans la direction de l'axe d'insertion (AA').

15. Kit selon l'une quelconque des revendications précédentes, le kit comprenant en outre un dispositif électronique portable (300) qui comporte au moins deux rainures (311, 331) sur une enveloppe externe (310) du dispositif portable (300), **caractérisé en ce qu'**au moins deux guides (111, 131) parmi la pluralité de guides sont agencés et dimensionnés de manière à coopérer avec lesdites au moins deux rainures (311,331).
